# EUROPEAN PATENT APPLICATION

(11) **EP 3 163 356 A1**
(43) Date of publication of application: **03.05.2017**
(21) Application number: 15815338.7
(22) Date of filing: 11.06.2015
(51) Int. Cl.: G02B 27/01, B60K 35/00, G02B 27/02, H04N 5/64

(54) **IMAGE DISPLAY DEVICE**

(30) Priority: 30.06.2014 JP 2014135098
(71) Applicant: Seiko Epson Corporation, Tokyo 160-881 (JP)
(72) Inventor: YOKOYAMA, Osamu, Suwa-shi, Nagano 392-8502 (JP)
(74) Representative: Hoffmann Eitle
(86) International application number: PCT/JP2015/002943
(87) International publication number: WO 2016/002138

(57) **Abstract**

Provided is an image display device that attains see-through characteristics and visual perceptibility with a simple structure.

An image display device includes a frame, a signal generation unit (light source unit) that generates signal light L1 that is a TE wave, a scan light emission unit that is provided with a light scan unit 42 (light scanner) that scans the signal light L1, a reflection unit 6 (reflecting optical unit) that reflects the signal light L1 scanned by the light scan unit 42; a diffracting optical unit 9 that includes a pair of diffraction gratings whose grating patterns are equivalent to each other and diffracts the signal light L1 reflected at the reflection unit 6; and a polarizing plate 8 (polarization selection unit) that is located at an opposite side in relation to the diffracting optical unit 9 with respect to the reflection unit 6 and allows outside-world light L2 that is a TM wave to pass toward the reflection unit 6, wherein the diffracting optical unit 9 diffracts the signal light L1 and does not diffract the outside-world light L2. The signal light L1 is split into plural beams at the diffracting optical unit 9 to enter the eye EY of a user.

## Description

### Technical Field

The present invention relates to an image display device.

### Background Art

A head-mounted display (HMD) is known as a display device that enables a user to visually perceive an image by directly irradiating the retina of the pupil with laser light.

In general, a head-mounted display includes a light emitting device that emits light and a scanning means that changes a light path so that the emitted light will be scanned on the retina of a user. Such a head-mounted display enables the user to visually perceive, for example, both the scene outside and the image drawn by the scanning means at the same time.

For example, an image display device that includes a light source device, a transmissive-type spatial light modulation element, a holographic polymer dispersion liquid crystal optical element, two 1/4 wavelength plates, a free-formed surface translucent mirror, and a polarizing plate is disclosed in Patent Literature 1. A beam of light emitted from the light source device is modulated in accordance with image information at the transmissive-type spatial light modulation element, and enters the holographic polymer dispersion liquid crystal optical element. At this optical element, P polarized image light of incident image light is diffracted, whereas S polarized image light thereof is not diffracted. The diffracted image light enters the 1/4 wavelength plates, and enters the free-formed surface translucent mirror as circularly polarized image light. After reflection by the free-formed surface translucent mirror, it enters the 1/4 wavelength plates again, and enters the holographic polymer dispersion liquid crystal optical element as S polarized image light. At this optical element, the S polarized image light is allowed to pass without diffraction. Therefore, the S polarized image light passing therethrough enters the eye of the user directly.

On the other hand, background light arriving from behind the free-formed surface translucent mirror pass sequentially through the polarizing plate, the 1/4 wavelength plate, the free-formed surface translucent mirror, the 1/4 wavelength plate, and the holographic polymer dispersion liquid crystal optical element to enter the eye of the user. In this process, the background light turns into linearly polarized background light at the polarizing plate, turns into circularly polarized background light at the first-stage 1/4 wavelength plate, turns into S polarized background light at the second-stage 1/4 wavelength plate after passing through the free-formed surface translucent mirror, and enters the holographic polymer dispersion liquid crystal optical element. As described earlier, at this optical element, the S polarized background light is allowed to pass without diffraction. Therefore, the S polarized background light passing therethrough enters the eye of the user directly.

Since the image display device disclosed in Patent Literature 1 is capable of superposing an image on the background, it can be used as an eyeglass-type virtual image display device that has a so-called see-through function (head-mounted display).

In order for the user of such a head-mounted display to be able to continue visually perceiving an image normally, it is necessary that the beam of image light and background light entering the pupil should be kept on the pupil of the user. However, it is difficult to keep the pupil of a user fixed when an image is visually perceived. It is not rare that the pupil moves, contrary to the user's intention. If the pupil moves, the beam goes off the pupil of the user. As a result, missing in the field of vision (vignetting) occurs in the display of an image and the background, etc., which makes it impossible for the user to visually perceive the image as supposed to, resulting in a decrease in visual perceptibility.

### Citation List

### Patent Literature

PTL 1: Japanese Unexamined Patent Application Publication No. 2003-315727

### Summary

### Technical Problem

An object of the present embodiment is to obtain an image display device that has see-through characteristics and visual perceptibility with a simple structure. Solution to Problem

The above object is achieved by the present embodiment described below.

An image display device according to the present embodiment comprises: a light source that emits first polarized light that is polarized in a first direction; a light scanner that scans the first polarized light emitted from the light source; a reflecting optical unit that reflects the first polarized light scanned by the light scanner; a diffracting optical unit that includes a pair of diffraction gratings whose grating patterns are equivalent to each other and diffracts the first polarized light reflected at the reflecting optical unit; and a polarization selection unit that is located at an opposite side in relation to the diffracting optical unit with respect to the reflecting optical unit and allows second polarized light to pass, the second polarized light being polarized in a second direction that is orthogonal to the first direction, wherein the diffracting optical unit diffracts the first polarized light and does not diffract the second polarized light.

Because of this structure, outside-world light (second polarized light) passes without being diffracted at the diffracting optical unit, whereas video light (first polarized light) passes while being split into a plurality of beams at the diffracting optical unit. Therefore, the user can visually perceive an outside-world image that is low in distortion, blur, and the like. Moreover, it is possible to make the exit pupil larger by splitting the video light. Consequently, an image display device that realizes both excellent see-through characteristics and high visual perceptibility can be obtained.

In such an image display device, since the method of scanning video light is adopted, a user recognizes an image as a set of point images formed by the video light. Therefore, a very small beam diameter of video light suffices, and it is possible to minimize image distortion and image blur, etc. based on the aberration of the reflection surface when the video light is reflected by the reflecting optical unit. This results in higher image resolution.

In the image display device according to the present embodiment, preferably, the diffracting optical unit should include the pair of diffraction gratings having the grating patterns made of an isotropic refractive index material and further include birefringence portions that are made of a birefringent material filled between each of the grating patterns of the pair of diffraction gratings as viewed in an incidence direction in which the first polarized light enters the diffracting optical unit.

Because of this structure, video light having entered the diffracting optical unit passes through the diffracting optical unit while being split into a plurality of beams along the array direction of the grating pattern of the diffraction grating. As a result, the plural split beams of video light enter the eye of the user. Therefore, the user can visually perceive a virtual image corresponding to image information and images based on plural beams reproduced in the direction.

In the image display device according to the present embodiment, preferably, when an index of refraction of the isotropic refractive index material is defined as n0, when an index of refraction of the birefringence portions in the first direction is defined as n1, and when an index of refraction of the birefringence portions in the second direction is defined as n2, n1 and n2 should be different from each other, and n0 and n2 should be equal to each other.

By this means, it is possible to diffract the first polarized light and not to diffract the second polarized light. Consequently, an image display device that realizes both excellent see-through characteristics and high visual perceptibility can be obtained.

In the image display device according to the present embodiment, preferably, the diffracting optical unit should include a substrate that is made of the isotropic refractive index material; a plurality of concave portions should be formed in surface of both sides of the substrate; and the plurality of concave portions should be filled with the birefringent material.

This makes it possible to manufacture the diffracting optical unit easily with high precision. Therefore, the diffracting optical unit that is high in dimensional precision and is relatively free from aberration can be obtained.

In the image display device according to the present embodiment, preferably, the reflecting optical unit should include a translucent mirror that has a concave reflection surface.

Therefore, the user can visually perceive an enlarged virtual image that is larger than the image formed on the reflection surface of the reflecting optical unit. This results in enhanced visual perceptibility by the user.

In the image display device according to the present embodiment, preferably, the diffracting optical unit should split the first polarized light that enters the diffracting optical unit into a plurality of beams by diffracting the first polarized light.

This makes the exit pupil of the first polarized light larger, which makes the visual perceptibility of the image formed by the first polarized light higher.

In the image display device according to the present embodiment, preferably, the first polarized light diffracted by the diffracting optical unit and the second polarized light not diffracted by the diffracting optical unit should reach an eye of a user.

Therefore, an image display device that realizes both excellent see-through characteristics and high visual perceptibility can be obtained.

### Brief Description of Drawings

[Fig. 1] A diagram that illustrates a schematic structure of an image display device according to a first embodiment (head-mounted display);
[Fig. 2] A partial enlarged view of the image display device illustrated in Fig. 1;
[Fig. 3] A schematic structure view of a signal generation unit of the image display device illustrated in Fig. 1;
[Fig. 4] A diagram that illustrates a schematic structure of a light scan unit included in a scan light emission unit illustrated in Fig. 1;
[Fig. 5] A diagram for schematically explaining the functional operation of the image display device illustrated in Fig. 1;
[Fig. 6] Fig. 6(a) is a Y-directional view of a diffracting optical unit illustrated in Fig. 5, and Fig. 6(b) is an X-directional view of the diffracting optical unit;
[Fig. 7] A diagram for schematically explaining the functional operation of an image display device according to a second embodiment;
[Fig. 8] Fig. 8(a) is a Y-directional view of a diffracting optical unit illustrated in Fig. 7, and Fig. 8(b) is an X-directional view of the diffracting optical unit; and
[Fig. 9] A diagram that illustrates an image display device according to a third embodiment (head-up display); Description of Embodiments

On the basis of preferred embodiments illustrated in the accompanying drawings, an image display device according to the present embodiment will now be explained in detail.

### <Image Display Device>

### « First Embodiment »

First of all, an image display device according to a first embodiment will now be explained.

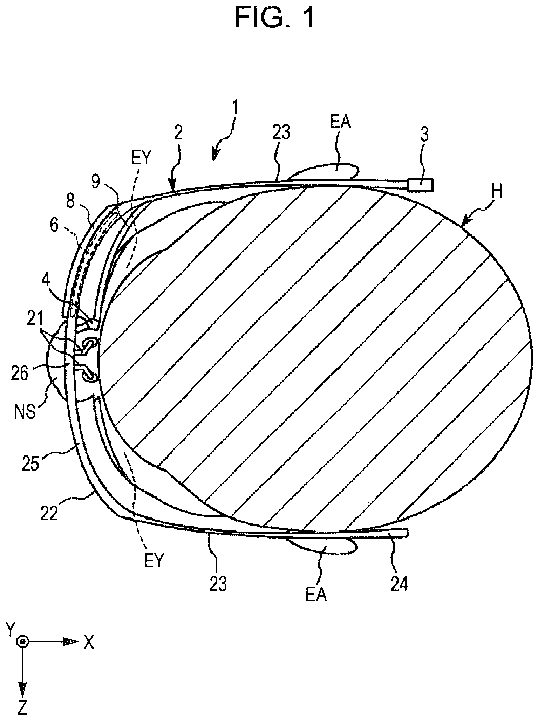

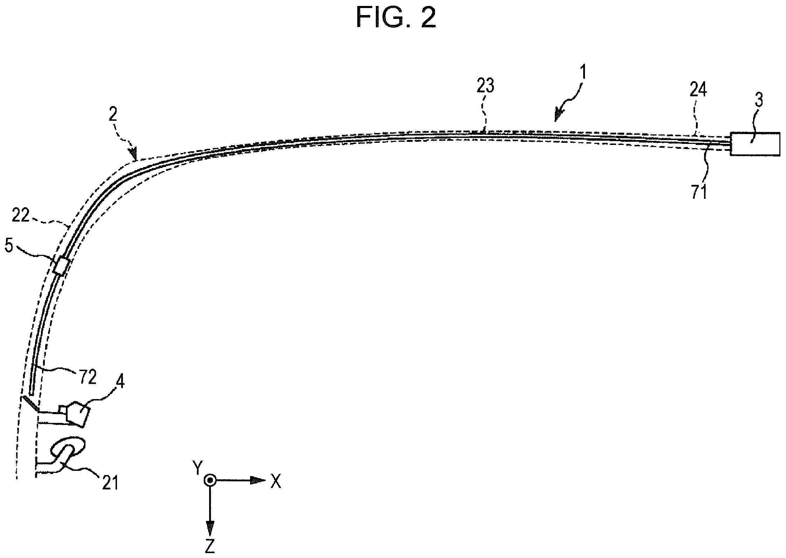

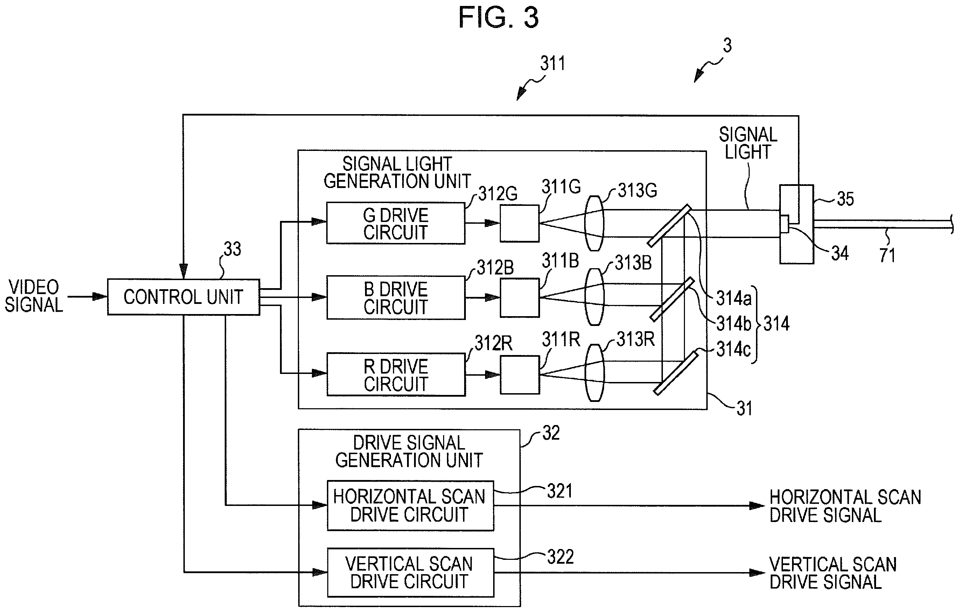

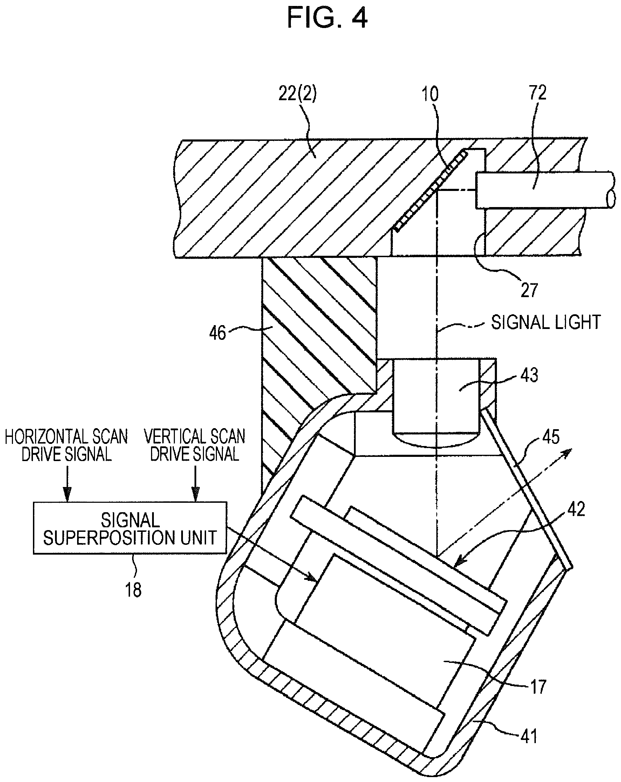

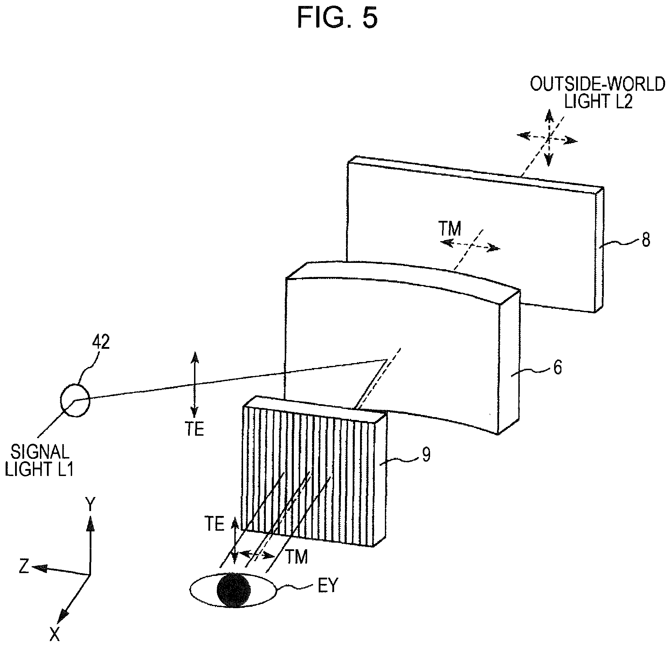

Fig. 1 is a diagram that illustrates a schematic structure of an image display device according to a first embodiment (head-mounted display). Fig. 2 is a partial enlarged view of the image display device illustrated in Fig. 1. Fig. 3 is a schematic structure view of a signal generation unit of the image display device illustrated in Fig. 1. Fig. 4 is a diagram that illustrates a schematic structure of a light scan unit included in a scan light emission unit illustrated in Fig. 1. Fig. 5 is a diagram for schematically explaining the functional operation of the image display device illustrated in Fig. 1.

In Fig. 1, for the purpose of easier description, X, Y, and Z axes are shown as three axes that are orthogonal to one another. The head of the axial arrow in the illustration is defined as "+ (plus)", and the tail thereof is defined as "- (minus)". The direction parallel to the X axis is hereinafter referred to as "X-axis direction". The direction parallel to the Y axis is hereinafter referred to as "Y-axis direction". The direction parallel to the Z axis is hereinafter referred to as "Z-axis direction".

The X, Y, and Z axes are set in such a way that, when an image display device 1 described later is worn on the head H of a user, the Y-axis direction be the up/down direction of the head H, the Z-axis direction be the left/right direction of the head H, and the X-axis direction be the front/rear direction of the head H.

As illustrated in Fig. 1, an image display device 1 according to the present embodiment is a head-mounted display (worn-on-the-head-type image display device) that looks like eyeglasses, is worn on the head H of a user for use, and enables the user to visually perceive an image based on virtual graphics in a state of being superposed on an outside-world image.

As illustrated in Fig. 1, the image display device 1 includes a frame 2, a signal generation unit 3, a scan light emission unit 4, a reflection unit 6, a polarizing plate 8, and a diffracting optical unit 9.

In addition to them, as illustrated in Fig. 2, the image display device 1 includes a first optical fiber 71, a second optical fiber 72, and a coupling unit 5.

In the image display device 1, the signal generation unit 3 generates signal light modulated in accordance with image information. The signal light propagates through the first optical fiber 71, the coupling unit 5, and the second optical fiber 72 into the scan light emission unit 4. The scan light emission unit 4 scans the signal light (video light) two-dimensionally to emit scan light. The reflection unit 6 reflects the scan light toward the eye EY of the user. This enables the user to visually perceive a virtual image corresponding to image information.

In the present embodiment, a case where the signal generation unit 3, the scan light emission unit 4, the coupling unit 5, the reflection unit 6, the first optical fiber 71, the second optical fiber 72, the polarizing plate 8, and the diffracting optical unit 9 are provided on the right side only of the frame 2 to produce a virtual image for the right eye only is taken as example. However, a virtual image for the left eye may be produced in addition to a virtual image for the right eye by providing, on the left side of the frame 2, the same components as those of the right side of the frame 2. Alternatively, a virtual image for the left eye only may be produced.

The means for optical connection between the signal generation unit 3 and the scan light emission unit 4 is not limited to an optical fiber means; for example, an alternative means based on various kinds of light guiding medium may be used instead.

The coupling of the first optical fiber 71 and the second optical fiber 72 by the coupling unit 5 is not always necessary. The signal generation unit 3 and the scan light emission unit 4 may be optically connected to each other via the first optical fiber 71 only, without the coupling unit 5.

Each unit of the image display device 1 will now be explained in detail.

### (Frame)

As illustrated in Fig. 1, the frame 2 has a shape like a frame of eyeglasses. The frame 2 has a function of supporting the signal generation unit 3 and the scan light emission unit 4.

As illustrated in Fig. 1, the frame 2 has a front portion 22 for supporting the scan light emission unit 4 and nose pads 21, a pair of temple portions 23 connected to the front portion 22 and worn on the ears of a user, and temple tip portions 24. The temple tip portion 24 is an end region at the opposite end of each of the temple portions 23, wherein said opposite end is not the end connected to the front portion 22.

The nose pads 21 are in contact with the nose NS of the user when in use to support the image display device 1 in relation to the head of the user. The front portion 22 includes eyewires 25 and a bridge 26.

The nose pad 21 has a structure that makes the position of the frame 2 on the user adjustable when in use.

The shape of the frame 2 is not limited to the illustrated example as long as it can be worn on the head H of a user.

### (Signal Generation Unit)

As illustrated in Fig. 1, the signal generation unit 3 is provided on one (the right one in the present embodiment) of the two temple tip portions 24 (the opposite end region of the temple portion 23, not the end connected to the front portion 22) of the frame 2 described above.

The signal generation unit 3 is located at the opposite non-eye EY end with respect to the ear EA of the user when in use. Because of this structure, the image display device 1 has an excellent weight balance.

The signal generation unit 3 has a function of generating signal light that is to be scanned by a light scan unit 42 of the scan light emission unit 4 described later. In addition, the signal generation unit 3 has a function of generating a drive signal for driving the light scan unit 42.

As illustrated in Fig. 3, the signal generation unit 3 includes a signal light generation unit 31, a drive signal generation unit 32, a control unit 33, a light detection unit 34, and a fixing unit 35.

The signal light generation unit 31 generates signal light that is to be scanned (optical scan) by the light scan unit 42 (light scanner) of the scan light emission unit 4 described later.

The signal light generation unit 31 includes a plurality of light sources 311R, 311G, and 311B, the wavelengths of which are different from one another, a plurality of drive circuits 312R, 312G, and 312B, a plurality of lenses 313R, 313G, and 313B, and a light synthesis unit (synthesis unit) 314.

The light source 311R (R light source) emits red light. The light source 311G (G light source) emits green light. The light source 311B (B light source) emits blue light. It is possible to display a full-color image by using the light of these three colors.

For example, laser diodes or LEDs can be used for the light sources 311R, 311G, and 311B, though not specifically limited thereto.

The light sources 311R, 311G, and 311B are electrically connected to the drive circuits 312R, 312G, and 312B respectively.

The drive circuit 312R has a function of driving the light source 311R mentioned above. The drive circuit 312G has a function of driving the light source 311G mentioned above. The drive circuit 312B has a function of driving the light source 311B mentioned above.

The three beams (three colors) emitted from the respective light sources 311R, 311G, and 311B driven by the respective drive circuits 312R, 312G, and 312B enter the light synthesis unit 314 through the respective lenses 313R, 313G, and 313B.

Each of the lenses 313R, 313G, and 313B is a collimator lens. Therefore, each of the beams emitted from the light sources 311R, 311G, and 311B turns into a collimated beam and thereafter enters the light synthesis unit 314.

The light synthesis unit 314 synthesizes the beams coming from the plurality of light sources 311R, 311G, and 311B. This makes it possible to reduce the number of optical fibers that are necessary for sending signal light generated at the signal light generation unit 31 to the scan light emission unit 4. For this reason, in the present embodiment, it is possible to send signal light from the signal generation unit 3 to the scan light emission unit 4 through a single light transfer path made up of the first optical fiber 71, the coupling unit 5, and the second optical fiber 72.

In the present embodiment, the light synthesis unit 314 includes three dichroic mirrors 314a, 314b, and 314c. The light synthesis unit 314 synthesizes the beams emitted from the light sources 311R, 311G, and 311B (three-color light consisting of red light, green light, and blue light) and outputs a single beam of signal light. In the description below, the light sources 311R, 311G, and 311B may be collectively referred to as "light source unit 311". Signal light generated at the signal light generation unit 31 may be referred to as "light emitted from the light source unit 311".

The structure of the light synthesis unit 314 is not limited to the above-described structure using the dichroic mirrors. For example, prisms, optical waveguides, optical fibers, or the like may be used instead.

The signal light generated at the signal light generation unit 31 as described above enters one end of the first optical fiber 71. The signal light passes through the first optical fiber 71, the coupling unit 5, and the second optical fiber 72 in this order to be sent to the light scan unit 42 of the scan light emission unit 4 described later.

The light detection unit 34 is provided near the light-incident-side end of the first optical fiber 71 at which the signal light enters (hereinafter may be simply referred to as "one end of the first optical fiber 71"). The light detection unit 34 detects the signal light. The one end of the first optical fiber 71 and the light detection unit 34 are fixed to the fixing unit 35.

The drive signal generation unit 32 generates a drive signal for driving the light scan unit 42 (light scanner) of the scan light emission unit 4 described later.

The drive signal generation unit 32 includes a drive circuit 321 (first drive circuit) and a drive circuit 322 (second drive circuit). The drive circuit 321 generates a first drive signal that is to be used for the scanning of the light scan unit 42 in a first direction (horizontal scan). The drive circuit 322 generates a second drive signal that is to be used for the scanning of the light scan unit 42 in a second direction (vertical scan) that is orthogonal to the first direction.

The drive signal generation unit 32 described above is electrically connected to the light scan unit 42 of the scan light emission unit 4 described later via a signal line that is not illustrated. Therefore, the drive signal (the first drive signal and the second drive signal) generated at the drive signal generation unit 32 is inputted into the light scan unit 42 of the scan light emission unit 4 described later.

The drive circuits 312R, 312G, and 312B of the signal light generation unit 31 and the drive circuits 321 and 322 of the drive signal generation unit 32 described above are electrically connected to the control unit 33.

The control unit 33 has a function of controlling the drive operation of the drive circuits 312R, 312G, and 312B of the signal light generation unit 31 and the drive circuits 321 and 322 of the drive signal generation unit 32 on the basis of a video signal (image signal). That is, the control unit 33 has a function of controlling the driving of the scan light emission unit 4. Therefore, the signal light generation unit 31 generates signal light modulated in accordance with image information, and the drive signal generation unit 32 generates a drive signal modulated in accordance with the image information.

In addition, the control unit 33 is configured to control the drive operation of the drive circuits 312R, 312G, and 312B of the signal light generation unit 31 on the basis of the intensity of the light detected at the light detection unit 34.

### (Scan Light Emission Unit)

As illustrated in Figs. 1 and 2, the scan light emission unit 4 is mounted at a position near the bridge 26 of the frame 2 (in other words, near the center of the front portion 22).

As illustrated in Fig. 4, the scan light emission unit 4 mentioned above includes a housing 41 (enclosure), the light scan unit 42, a lens 43 (coupling lens), another lens (condensing lens) 45, and a supporting member 46.

The housing 41 is fixed to the front portion 22 via the supporting member 46.

The outer surface of the housing 41 is connected to the opposite portion of the supporting member 46, which is the opposite of the portion connected to the frame 2.

The housing 41 supports the light scan unit 42 and houses the light scan unit 42 inside. The lenses 43 and 45 are fixed to the housing 41. The lenses 43 and 45 constitute a part of the housing 41 (a part of its wall).

The lens 43 (window portion of the housing 41 for allowing signal light to pass through itself) is located at a distance from the second optical fiber 72. In the present embodiment, the signal-light-outputting end of the second optical fiber 72 is located at a position where it faces a reflector 10, which is provided in the front portion 22 of the frame 2, at a distance from the scan light emission unit 4.

The reflector 10 has a function of reflecting, toward the light scan unit 42, the signal light going out of the second optical fiber 72. The reflector 10 is provided in a cavity 27, which is formed inside the front portion 22. The opening of the cavity 27 may be covered by a window that is made of a transparent material. Any optical means that is capable of reflecting signal light may be used as the reflector 10. For example, the reflector 10 may be a mirror, a prism, or the like.

The light scan unit 42 is a light scanner that scans the signal light coming from the signal light generation unit 31 two-dimensionally. Scan light is produced as a result of the scanning of the signal light at the light scan unit 42. Specifically, the signal light going out of the second optical fiber 72 enters the light reflection surface of the light scan unit 42 through the lens 43. The signal light is scanned two-dimensionally by driving the light scan unit 42 in accordance with the drive signal generated at the drive signal generation unit 32.

The light scan unit 42 includes a coil 17 and a signal superposition unit 18 (refer to Fig. 4). The coil 17, the signal superposition unit 18, and the drive signal generation unit 32 constitute a drive unit that drives the light scan unit 42.

The lens 43 has a function of adjusting the spot diameter of the signal light going out of the first optical fiber 71. In addition, the lens 43 has a function of adjusting the radiation angle of the signal light going out of the first optical fiber 71 to substantially parallelize it.

The signal line (scan light) scanned at the light scan unit 42 exits to the outside of the housing 41 through the lens 45.

Instead of the light scan unit 42, which scans the signal light two-dimensionally, the scan light emission unit 4 may be provided with a plurality of light scan units that scan the signal light one-dimensionally.

### (Reflection Unit)

As illustrated in Figs. 1 and 2, the reflection unit 6 (reflecting optical unit) is fixed to the eyewire 25 included in the front portion 22 of the frame 2 described earlier.

That is, the reflection unit 6 is located at a position in front of the eye EY of a user when in use to be farther from the user as compared with the light scan unit 42. Because of this structure, it is possible to prevent any portion bulging ahead in relation to the face of the user from being formed in the image display device 1.

As illustrated in Fig. 5, the reflection unit 6 has a function of reflecting the signal light coming from the light scan unit 42 toward the eye EY of the user.

In the present embodiment, the reflection unit 6 is a half mirror (translucent mirror) and therefore has a function of allowing outside-world light to pass through itself (transparency to visible light). That is, the reflection unit 6 has a function of reflecting the signal light (video light) coming from the light scan unit 42 and allowing outside-world light propagating from the outside of the reflection unit 6 toward the eye of the user to pass through itself when in use (combiner function). This function enables the user to visually perceive a virtual image (image) formed by the signal light while seeing the outside world. That is, a see-through-type head-mounted display is realized.

The user-side surface of the reflection unit 6 is a concave reflection surface. Therefore, the signal light reflected by the reflection unit 6 converges toward the user. Therefore, the user can visually perceive an enlarged virtual image that is larger than the image formed on the concave surface of the reflection unit 6. This enhances visual perceptibility by the user.

The distant-side surface of the reflection unit 6, that is, the surface that is farther from the user, is a convex surface that has almost the same curvature as that of the concave surface mentioned above. For this reason, outside-world light reaches the eye of the user without any significant deflection at the reflection unit 6. Therefore, the user can visually perceive an outside-world image that is low in distortion.

The reflection unit 6 may include, for example, a diffraction grating. If this is the case, it is possible to reduce the number of parts in an optical system or to enhance design flexibility by applying various optical characteristics to the diffraction grating. For example, by using a hologram element as the diffraction grating, it is possible to adjust the output direction of signal light reflected at the reflection unit 6 or to select the wavelength of the signal light reflected. Moreover, by using an element that has lens effects as the diffraction grating, it is possible to adjust the image-forming state of the entire scan light made of the signal light reflected at the reflection unit 6 or to correct aberration arising when the signal light is reflected by the concave surface.

The reflection unit 6 may have a structure of, for example, a semi-transmissive reflection film made of a metal thin film or a dielectric multilayer film, etc. formed on a transparent substrate. A polarization beam splitter may be used. If a polarization beam splitter that reflects signal light that is a TE wave described later and allows outside-world light that is a TM wave described later to pass is used, it is possible to enhance see-through characteristics and visual perceptibility.

### (First Optical Fiber, Light Detection Unit, Fixing Unit)

The fixing unit 35 has a function of fixing the one end of the first optical fiber 71 at a position where the intensity of light entering the first optical fiber 71 from the light source unit 311 is greater than 0 but not greater than a predetermined value. By this means, it is possible to ensure that the intensity of light entering the first optical fiber 71 from the light source unit 311 is low.

In addition, the fixing unit 35 has a function of fixing the light detection unit 34. This makes it possible to efficiently utilize, in the light (signal light) emitted from the light source unit 311, the remaining portion that does not enter the first optical fiber 71. Moreover, it is possible to fix a positional relationship between the one end of the first optical fiber 71 and the light detection unit 34 (keep it fixed).

Since the light detection unit 34 is fixed to the fixing unit 35 in this way, it is possible to detect the intensity of emitted light without any need for proving a branching optical system that branches the signal light emitted from the light sources 311R, 311G, and 311B. Furthermore, on the basis of the intensity of the light detected at the light detection unit 34, it is possible to adjust the intensity of light emitted from the light sources 311R, 311G, and 311B at the control unit 33. It is true to say that the control unit 33 is a "light control unit" that controls the light sources 311R, 311G, and 311B.

It is not indispensable to provide the fixing unit 35 described above. A structure that couples the light emitted from the light source unit 311 to the optical fiber 71 without intentionally diminishing said light may be adopted. Moreover, it is not indispensable to provide the light detection unit 34 on the fixing unit 35. The position of the light detection unit 34 is not specifically limited as long as it is provided at a position where it can detect the light amount of the light source unit 311.

### (Polarizing Plate)

The polarizing plate 8 (polarization selection unit) is provided at a distant side that is farther from the user than the reflection unit 6 is. Since the diffracting optical unit 9 is provided at a near side that is closer to the user than the reflection unit 6 is, it is true to say that the polarizing plate 8 is located at the opposite side in relation to the diffracting optical unit 9 with respect to the reflection unit 6. Therefore, light coming from the outside (outside-world light) goes through the polarizing plate 8 to enter the reflection unit 6.

In general, outside-world light is natural light. It is unpolarized light, the direction of vibration of which is not biased in any specific direction. When such outside-world light enters the polarizing plate 8, the polarizing plate 8 is capable of selectively allowing light polarized in a specific direction to pass through itself. Therefore, light having passed through the polarizing plate 8 is linearly polarized.

Among the waves of outside-world light propagating toward +X side, the polarizing plate 8 according to the present embodiment allows a TM wave only (light polarized in a second direction, second polarized light), which vibrates in the Z-axis direction in Fig. 5, to pass through itself, and blocks a TE wave (light polarized in a first direction, first polarized light), which vibrates in the Y-axis direction. The TM wave passes through the reflection unit 6, which is a half mirror, and enters the diffracting optical unit 9. In Fig. 5, the broken line represents outside-world light L2, and the solid line represents signal light L1.

The method of fixing the polarizing plate 8 is not specifically limited herein. For example, the polarizing plate 8 may be fixed in contact with the reflection unit 6, or may be fixed at a distance from the reflection unit 6.

### (Diffracting Optical Unit)

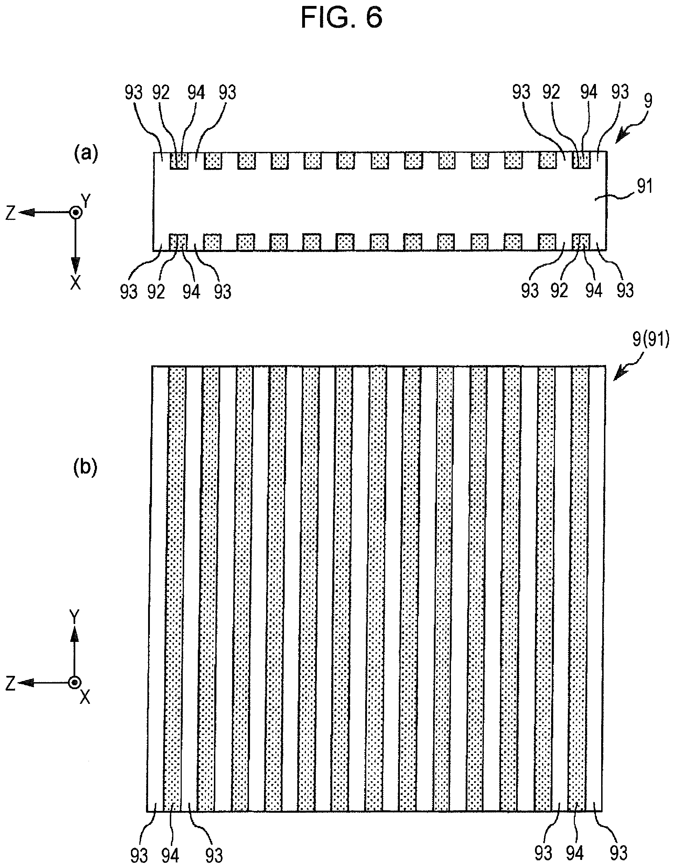

Fig. 6(a) is a Y-directional view of the diffracting optical unit 9 illustrated in Fig. 5. Fig. 6(b) is an X-directional view of the diffracting optical unit 9.

As illustrated in Fig. 6(a), the diffracting optical unit 9 includes a substrate 91, a plurality of grooves (concave portions) 92 formed next to one another in each of the two sides (plate surface of both sides) of the substrate 91, convex-patterned ridges 93 adjoining the grooves 92, and birefringence portions 94 formed inside the grooves 92. In other words, the plural grooves (concave portions) 92 are formed in the plate surface of both sides of the substrate 91, and the grooves 92 are filled with a birefringent material to constitute the birefringence portions 94.

As illustrated in Fig. 6(b), the substrate 91 has a shape of a rectangular plate when viewed in a direction in which signal light and outside-world light enters the diffracting optical unit 9 (X-axis direction). In one of two opposite-to-each-other principal surfaces (plate surface) defining the front and back of the substrate 91, the grooves 92 extending in the Y-axis direction are formed next to one another in the Z-axis direction. The ridges 93 are arranged at positions where they adjoin the grooves 92 in the Z-axis direction. Therefore, the grooves 92 and the ridges 93 are arranged alternately in the Z-axis direction. Similarly, the grooves 92 extending in the Y-axis direction and the ridges 93 adjoining the grooves 92 are formed in the other principal surface. The positions of the grooves 92 and the ridges 93 in the one principal surface correspond to the positions of the grooves 92 and the ridges 93 in the other principal surface.

It is true to say that, in essence, the diffracting optical unit 9 has diffraction gratings that are equivalent to each other and are provided respectively in both sides of the substrate 91.

In the diffracting optical unit 9 according to the present embodiment, the substrate 91 and the ridges 93 are formed integrally. It is possible to easily and precisely manufacture such a diffracting optical unit 9 by forming the grooves 92 in both sides of a flat mother substrate and thereafter by providing the birefringence portions 94. Therefore, the diffracting optical unit 9 that is high in dimensional precision and is relatively free from aberration can be obtained.

In the present embodiment, the substrate 91 and the ridges 93 are made of a non-birefringent material (isotropic refractive index material). For this reason, the substrate 91 and the ridges 93 exhibit a single index of refraction irrespective of the state of polarization of light passing through them. On the other hand, the birefringence portions 94 are made of a birefringent material. For this reason, the birefringence portions 94 exhibit two different indices of refraction depending on the state of polarization of light passing through them. Depending on the state of polarization of light passing through the diffracting optical unit 9, the presence or absence of birefringence mentioned above affects the behavior of the light passing therethrough.

That is, when the diffracting optical unit 9 is viewed in the direction of incidence of signal light and outside-world light (X-axis direction), the diffracting optical unit 9 includes the linear ridges 93 (second area), which constitute a grating pattern made of an isotropic refractive index material, and the birefringence portions 94 (first area), which are made of a birefringent material filled between the plural ridges 93.

Let n0 be the index of refraction of the substrate 91 and the ridges 93. Let n1 and n2 be the two indices of refraction exhibited by the birefringence portions 94. In addition, in the present embodiment, the index of refraction of the birefringence portions for a TE wave (light vibrating in the Y-axis direction (first polarized light)) is defined as n1, and the index of refraction of the birefringence portions for a TM wave (light vibrating in the Z-axis direction (second polarized light)) is defined as n2.

In the present embodiment, the non-birefringent material and the birefringent material are selected appropriately in such a way as to make the index of refraction n0 and the index of refraction n2 equal to each other. In addition, the birefringence portions 94 are structured in such a way as to make the index of refraction n0 and the index of refraction n2 equal to each other.

A case where outside-world light L2, which is a TM wave, enters the diffracting optical unit 9 as illustrated in Fig. 5 will now be explained. In the diffracting optical unit 9, the ridges 93 have the index of refraction n0 for the outside-world light L2, and the birefringence portions 94 have the index of refraction n2 for it. As described earlier, in the present embodiment, the index of refraction n0 and the index of refraction n2 are equal to each other. Therefore, the diffracting optical unit 9 does not function as any diffraction grating for the outside-world light L2. For this reason, the beam of the outside-world light L2 passes through the diffracting optical unit 9 without diffraction, and enters the eye EY of the user.
Consequently, the user can visually perceive an outside-world image that is low in distortion, blur, and the like.

A case where signal light L1, which is a TE wave, enters the diffracting optical unit 9 as illustrated in Fig. 5 will now be explained. In the diffracting optical unit 9, the ridges 93 have the index of refraction n0 for the signal light L1, and the birefringence portions 94 have the index of refraction n1 for it. As described earlier, in the present embodiment, the index of refraction n0 and the index of refraction n1 are not equal to each other. Therefore, the diffracting optical unit 9 functions as diffraction gratings for the signal light L1. For this reason, the signal light L1 is diffracted by the diffracting optical unit 9 and passes through it while being split (branching) into plural beams along the Z-axis direction. For this reason, the plural split beams of the signal light L1 enter the eye EY of the user. As a result, the exit pupil of the signal light L1 is made larger. Therefore, even if there is some movement of the eye of the user, any of the plural beams enters the pupil, which makes image observation easier (visual perceptibility improves).

Therefore, though the diffracting optical unit 9 does not have any concave and convex shape in its surface, it causes diffraction due to a phase difference based on the difference between the indices of refraction. For this reason, the diffracting optical unit 9 functions as phase-type diffraction gratings. Since the diffracting optical unit 9 does not have any concave and convex shape in its surface, it is unlikely that a shadow arising from such surface concavity and convexity will be produced and, therefore, it is possible to avoid adverse effects caused by the shadow.

In Fig. 5, a case where the beam of signal light L1 is split into three beams is illustrated as an example. These three beams are three beams diffracted in the same direction as a result of the diffraction of the signal light L1 by the pair of diffraction gratings. Specifically, when the signal light L1 enters one of the pair of diffraction gratings, a beam of zero-order diffracted light, and beams of first-order diffracted light and minus-first-order diffracted light, which are located at both sides thereof respectively, are produced. Next, these beams of diffracted light propagate through the substrate 91 and thereafter arrive at the other diffraction grating. These beams of diffracted light get further diffracted thereat, thereby each producing plural beams of diffracted light. In this way, plural beams of outgoing light are produced from each of the zero-order diffracted light, the first-order diffracted light, and the minus-first-order diffracted light. These beams of outgoing light include beams whose outgoing angles are equal to each other. Therefore, by directing the beams whose outgoing angles are equal to each other to the eye EY of the user, the effects described above are ensured.

The number of the splits of the signal light L1 in the diffracting optical unit 9 is not specifically limited. It may be two, or four or more. In such a case, diffracted light that is higher in order than first-order diffracted light and minus-first-order diffracted light may be used.

When signal light L1 is split in this way, an exit pupil constituted by three beams is substantially larger than an exit pupil constituted by a single beam. Therefore, it follows that the movement of the pupil of the eye EY is tolerated by a predetermined amount corresponding to the increase in the exit pupil while preventing missing in the field of vision (vignetting) from occurring. Consequently, even when the pupil of the user moves unintendedly, the user can visually perceive an image as supposed to, meaning that the image display device 1 that realizes high visual perceptibility can be obtained.

When the beam of signal light L1 is split into plural beams, the relative positions of the beams after the splitting are set appropriately depending on the size of the pupil of the user and depending on the tendency of the amount of movement when the pupil moves. For example, the position of the diffracting optical unit 9 is set appropriately so that at least one beam will enter the pupil. The exit pupil made substantially larger by splitting the beam of signal light L1 is set appropriately in such a way as to encompass the range of pupil movement.

For example, assuming that the ordinary size of a pupil is approx. 2 to 8 mm and that the width of pupil movement to the left and to the right is approx. 2 mm each, it suffices to set the exit pupil constituted by the beams after the splitting (the distance between the beams after the splitting) to be 4 mm or greater.

In general, when a pupil moves, there is a tendency that the movement in the Z-axis direction is relatively frequent and that the movement amount thereof is relatively large. Therefore, in a case of the image display device 1 that is to be worn on the head H in accordance with the position of the eye EY of a user, for example, a head-mounted display, the diffracting optical unit 9 should be mounted in such a way that the beam of signal light L1 will be split along the Z-axis direction. This ensures that the direction of pupil movement coincides with the splitting direction of the beam of signal light L1, resulting in enhanced visual perceptibility of an image.

With the image display device 1 described above, despite its simple structure, it is possible to obtain both see-through characteristics of superposing an image on an outside-world image and high visual perceptibility of the outside-world image and the image. That is, since the image display device 1 realizes the diffraction of the signal light L1 and the non-diffraction of the outside-world light L2 compatibly at the diffracting optical unit 9, which includes the pair of diffraction gratings that are equivalent to each other, the image display device 1 enables the user to visually perceive the outside-world image that is low in distortion, blur, and the like while making the exit pupil of the image larger, even with a small number of optical elements. Therefore, with the image display device 1, both see-through characteristics and visual perceptibility can be obtained without using plural 1/4 wavelength plates or similar optical elements.

In the image display device 1, since a method of scanning light onto the retina of the eye EY is adopted, the image on the retina is recognized as a set of point images formed by the signal light L1. Therefore, a very small beam diameter of the signal light L1 suffices. For this reason, when the signal light L1 is reflected by the concave surface of the reflection unit 6, it is possible to minimize image distortion and image blur, etc. based on the aberration of the concave surface. In a case of signal light modulated spatially by a spatial light modulation element such as, for example, a liquid crystal display element, it is inevitable that the diameter of a beam should be large to some extent. Therefore, when the light is reflected by the concave surface, image distortion and image blur, etc. based on the aberration of the concave surface is amplified, resulting in a decrease in image resolution. In contrast, the image display device 1 realizes higher image resolution because the beam diameter of the signal light L1 is small as described above.

The non-birefringent material of which the substrate 91 and the ridges 93 are made is not specifically limited as long as it is a material that has optical isotropy. Some examples are: various resin materials such as acrylic resin, olefinic resin, or polyethylene terephthalate, various glass materials such as quartz glass or borosilicate glass, or various crystal materials such as sapphire.

The birefringent material of which the birefringence portions 94 are made is not specifically limited as long as it is a material that has birefringence. For example, it may be an intrinsic birefringent material such as rutile (TiO₂), calcite (CaCO₃), lithium niobate, quartz, liquid crystal, polycarbonate, or polystyrene.

A preferred example among them is liquid crystal. If liquid crystal is used, it is easy to control the indices of refraction n1 and n2 of the birefringence portions 94 by adjusting the degree of liquid crystal orientation appropriately. Therefore, it is easy to make the index of refraction n0 and the index of refraction n2 equal to each other and to optimize the difference between the index of refraction n1 and the index of refraction n2. Specifically, since liquid crystal contains rod-shaped liquid crystal molecules, the orienting of the liquid crystal molecules in a specific direction gives rise to refractive anisotropy in the birefringence portions 94. Consequently, it is easy to make the index of refraction n1 for a TE wave and the index of refraction n2 for a TM wave different from each other at the birefringence portions 94.

For orientation of liquid crystal, as may be necessary, rubbing treatment may be applied to the inner surface of the grooves 92, or an alignment film may be formed.

"The index of refraction n0 and the index of refraction n2 are equal to each other" means a state in which the difference between these two indices of refraction is not greater than 0.005. Similarly, "the index of refraction n1 and the index of refraction n2 are different from each other" means a state in which the difference between these two indices of refraction (the difference between the index of refraction of the ordinary ray and the index of refraction of the extraordinary ray) is in excess of 0.005.

Preferably, the difference between the index of refraction n0 and the index of refraction n2 should be not greater than 0.003. Preferably, the difference between the index of refraction n1 and the index of refraction n2 should be not less than 0.1.

The birefringent material may be a material that has birefringence as the material's own property. Alternatively, the birefringent material may be a structural birefringent material that is a set of, or an array of, periodic, or non-periodic, structural components shorter than the wavelength of light. A material that is a set of elongated particles or fibers whose diameter is not greater than the wavelength is an example of such a structural birefringent material.

In the present embodiment, light polarized in the extending direction of the grooves 92 and the ridges 93 of the diffracting optical unit 9 is defined as a TE wave, and light polarized in the direction orthogonal to the extending direction is defined as a TM wave.

As described earlier, the grating patterns of the diffraction gratings provided in the respective two sides of the substrate 91 are equivalent to each other. Specifically, the width of the groove 92 formed in one of the two principal surfaces of the substrate 91 and the width of the ridge 93 formed therein are respectively equal to the width of the groove 92 formed in the other principal surface and the width of the ridge 93 formed therein, and the pitch of the grooves 92 formed in one of the two principal surfaces of the substrate 91 and the pitch of the ridges 93 formed therein are respectively equal to the pitch of the grooves 92 formed in the other principal surface and the pitch of the ridges 93 formed therein. In addition, the grooves 92 formed in one of the two principal surfaces of the substrate 91 are parallel to the grooves 92 formed in the other principal surface, and the ridges 93 formed in one of the two principal surfaces of the substrate 91 are parallel to the ridges 93 formed in the other principal surface. Since such a pair of diffraction gratings that are equivalent to each other are provided, there exists diffracted light for which the angle of incidence of light that comes into the diffracting optical unit 9 and the outgoing angle of light that goes out after diffraction by the diffracting optical unit 9 are equal to each other. Therefore, by directing such outgoing light to the eye EY of the user, it is possible to enable the user to visually perceive an image in a state in which the scan angle of the signal light L1 scanned in accordance with image information is kept. This prevents the scanned signal light L1 from diffracting in any unintended direction and, therefore, the user can visually perceive a high resolution image.

It is possible to adjust the outgoing angle of light going out of the diffracting optical unit 9 by adjusting the pitch of the grooves 92 and the pitch of the ridges 93 appropriately. Therefore, an outgoing angle adjustment should be made so as to be able to block, among the plural beams of outgoing light, those other than outgoing light directed to the eye EY of the user. By this means, it is possible to block outgoing light that is unnecessary for forming an image, thereby making it possible to produce an image that is higher in contrast.

The width of the groove 92 and the width of the ridge 93 are set appropriately depending on the outgoing angle of the diffracting optical unit 9, the indices of refraction of the birefringent material, and the like. The sum of the width of the groove 92 and the width of the ridge 93 that are located adjacent to each other, that is, the pitch of the groove 92 and the ridge 93, should preferably be not greater than 2 µm so as to make the intervals of beams going out of the diffracting optical unit 9 appropriate. More preferably, it should be approximately not greater than 1 µm.

From the viewpoint of diffraction efficiency and ease of manufacture, the depth of the groove 92 should be not greater than 1 µm. More preferably, it should be approximately not greater than 0.5 µm.

Moreover, "the grooves 92 are equal to each other in terms of width and pitch and the ridges 93 are equal to each other in terms of width and pitch" is meant to tolerate an error arising from any unavoidable cause such as manufacturing variations or the anisotropy of a material. Similarly, "the grooves 92 are parallel to each other and the ridges 93 are parallel to each other" is a concept that tolerates an error arising from any unavoidable cause such as those mentioned above.

The method of fixing the diffracting optical unit 9 is not specifically limited herein. For example, the diffracting optical unit 9 may be fixed in contact with a part of the reflection unit 6, or may be fixed to the frame 2 at a distance from the reflection unit 6.

Though the first embodiment is described above, the embodiments are not limited to the first embodiment. For example, a TE wave and a TM wave may be interchanged with each other for the signal light L1 and the outside-world light L2. In such a case, the structure of the birefringence portions 94 should be modified appropriately so as to diffract the signal light L1 that is a TM wave and so as not to diffract the outside-world light L2 that is a TE wave.

Though the diffracting optical unit 9 may be formed by integrating the pair of diffraction gratings as described above, it may be formed by arranging two independent diffraction gratings opposite each other.

### <<Second Embodiment>>

Next, an image display device according to a second embodiment will now be explained.

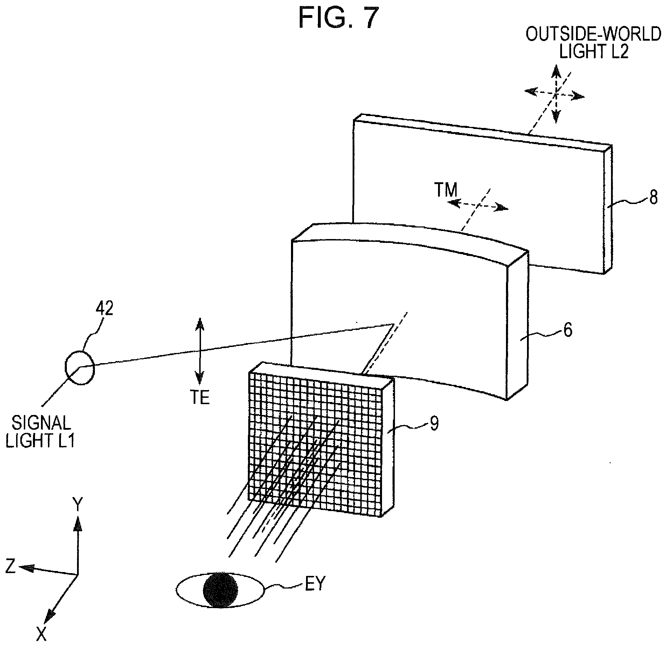

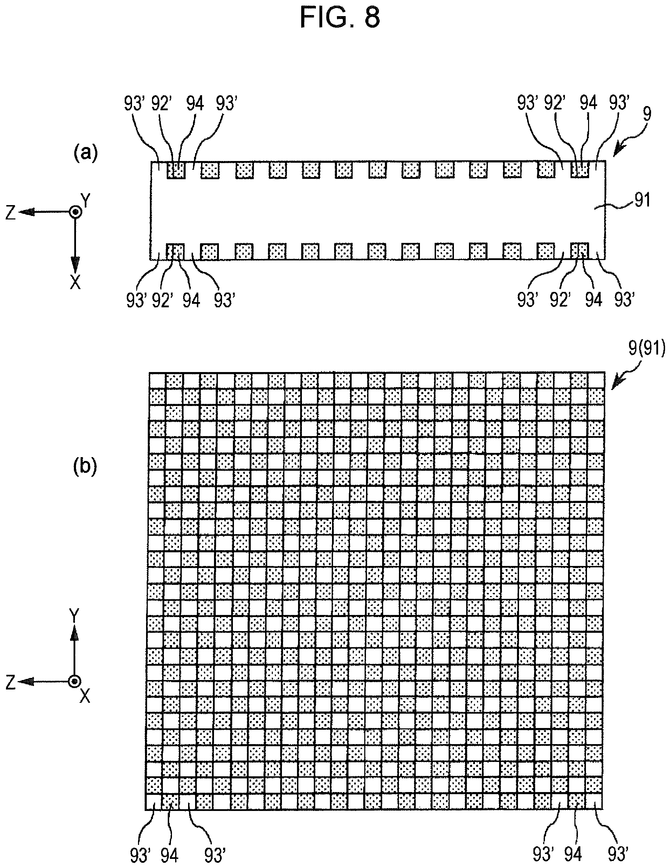

Fig. 7 is a diagram for schematically explaining the functional operation of an image display device according to a second embodiment. Fig. 8(a) is a Y-directional view of the diffracting optical unit 9 illustrated in Fig. 7. Fig. 8(b) is an X-directional view of the diffracting optical unit 9.

In the explanation of the second embodiment below, the points of difference from the foregoing first embodiment are mainly explained, and an explanation is omitted for the same matters. In the drawings, the same reference signs are assigned to the same matters as those of the foregoing embodiment.

The diffracting optical unit 9 according to the second embodiment is the same as the diffracting optical unit 9 according to the first embodiment except for the difference in the grating pattern of each diffraction grating.

That is, in the diffracting optical unit 9 according to the present embodiment, as illustrated in Fig. 8, when viewed in a direction in which the signal light L1 and the outside-world light L2 enters the diffracting optical unit 9 (X-axis direction), the birefringence portions 94 (first area) and convex portions 93' (second area) are arranged alternately in the Y-axis direction and the Z-axis direction, wherein each of the birefringence portions 94 is made of a birefringent material and has a square shape, and wherein each of the convex portions 93' is made of a non-birefringent material (isotropic refractive index material) and has a square shape. In other words, the diffracting optical unit 9 includes the square-shaped convex portions 93' constituting a grating pattern made of an isotropic refractive index material and further includes the birefringence portions 94 made of a birefringent material filled between the plural convex portions 93'. Still in other words, any two of the square-shaped birefringence portions 94 are arranged in such a way as not to share any of their sides. Consequently, the plural birefringence portions 94 are arranged diagonally adjacent to one another. Similarly, any two of the square-shaped convex portions 93' are arranged in such a way as not to share any of their sides. Consequently, the plural convex portions 93' are arranged diagonally adjacent to one another.

Therefore, the grating pattern of each of the pair of diffraction gratings of the diffracting optical unit 9 according to the present embodiment is a pattern in which the convex portions 93' and the birefringence portions 94 are arranged alternately in the Y-axis direction and in which the convex portions 93' and the birefringence portions 94 are arranged alternately in the Z-axis direction, too, as illustrated in Fig. 8(b).

The grating patterns of the pair of diffraction gratings of the diffracting optical unit 9 are equivalent to each other in the present embodiment, too. Specifically, as illustrated in Fig. 8, the diffracting optical unit 9 according to the present embodiment includes the substrate 91, concave portions 92' formed in each of the two sides (plate surface of both sides) of the substrate 91, the convex portions 93' adjoining the concave portions 92', and the birefringence portions 94 formed respectively inside the concave portions 92'. In other words, the plural concave portions 92' are formed in the plate surface of both sides of the substrate 91, and the concave portions 92' are filled with a birefringent material to constitute the birefringence portions 94.

The length of one side of the convex portions 93' formed in one of the two principal surfaces of the substrate 91 is equal to the length of one side of the convex portions 93' formed in the other principal surface, and the length of one side of the birefringence portion 94 formed in one of the two principal surfaces of the substrate 91 is equal to the length of one side of the birefringence portion 94 formed in the other principal surface. Moreover, the directions in which the convex portions 93' and the birefringence portions 94 are arranged alternately in one of the two principal surfaces of the substrate 91 coincide with the directions in which the convex portions 93' and the birefringence portions 94 are arranged alternately in the other principal surface.

When outside-world light L2, which is a TM wave, enters the diffracting optical unit 9 as illustrated in Fig. 7, as is the case with the first embodiment, the diffracting optical unit 9 does not function as any diffraction grating for the outside-world light L2. For this reason, the beam of the outside-world light L2 passes through the diffracting optical unit 9 without diffraction, and enters the eye EY of the user. Consequently, the user can visually perceive an outside-world image that is low in distortion, blur, and the like.

When signal light L1, which is a TE wave, enters the diffracting optical unit 9 as illustrated in Fig. 7, the diffracting optical unit 9 functions as diffraction gratings for the signal light L1. For this reason, the signal light L1 is diffracted by the diffracting optical unit 9 and passes through it while being split (branching) not only along the Z-axis direction but also along the Y-axis direction. For this reason, the plural beams of the signal light L1 split two-dimensionally enter the eye EY of the user. An exit pupil constituted by the beams of the signal light L1 split two-dimensionally in this way is enlarged two-dimensionally. Therefore, it follows that the movement of the pupil is tolerated not only in the Z-axis direction but also in the Y-axis direction while preventing missing in the field of vision from occurring. Consequently, the image display device 1 that realizes higher visual perceptibility can be obtained.

The functional operation and effects that are the same as those of the first embodiment can be obtained in the second embodiment, too.

### <<Third Embodiment>>

Next, an image display device according to a third embodiment will now be explained.

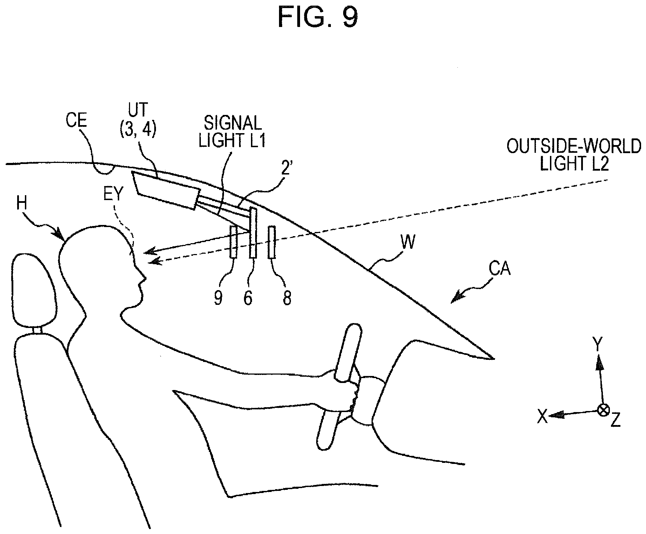

Fig. 9 is a diagram that illustrates an image display device according to a third embodiment (head-up display). In Fig. 9, for the purpose of easier description, X, Y, and Z axes are shown as three axes that are orthogonal to one another. The head of the axial arrow in the illustration is defined as "+ (plus)", and the tail thereof is defined as "-(minus)". The direction parallel to the X axis is hereinafter referred to as "X-axis direction". The direction parallel to the Y axis is hereinafter referred to as "Y-axis direction". The direction parallel to the Z axis is hereinafter referred to as "Z-axis direction".

In the explanation of the third embodiment below, the points of difference from the foregoing first and second embodiments are mainly explained, and an explanation is omitted for the same matters. In the drawings, the same reference signs are assigned to the same components as those of the foregoing embodiments.

The image display device 1 according to the third embodiment is the same as the image display device 1 according to the first and second embodiments except that the image display device 1 according to the third embodiment is not to be worn on the head of a user but is installed on the ceiling of a vehicle for use.

That is, the image display device 1 according to the third embodiment is installed on the ceiling CE of a vehicle CA for use, and enables the user to visually perceive an image based on virtual graphics in a state of being superposed on an outside-world image through the front window W of the vehicle CA.

As illustrated in Fig. 9, the image display device 1 includes a light source unit UT, in which a signal generation unit 3 and a scan light emission unit 4 are built, a reflection unit 6, a frame 2', which is connected to the light source unit UT and the reflection unit 6, a polarizing plate 8, and a diffracting optical unit 9. In Fig. 9, a member for fixing the frame 2' and the polarizing plate 8 and a member for fixing the frame 2' and the diffracting optical unit 9 are not illustrated.

In the present embodiment, a case where the light source unit UT, the frame 2', the reflection unit 6, the polarizing plate 8, and the diffracting optical unit 9 are installed on the ceiling CE of a vehicle CA is taken as example. However, they may be installed on the dashboard of a vehicle CA. A part of them may be fixed to the front window W. The image display device 1 may be installed on various kinds of a movement means without any limitation to a vehicle, for example, an aircraft, a ship, a construction machine, a heavy machine, a motorcycle, a bicycle, or a spacecraft.

Each unit of the image display device 1 will now be explained in detail.

Any fixing method may be used for fixing the light source unit UT to the ceiling CE. For example, the light source unit UT is fixed to a sun visor by using a band or a clip, etc.

The frame 2' has, for example, a pair of elongated members, and fixes the light source unit UT and the reflection unit 6 by connecting the light source unit UT and both ends of the reflection unit 6 in the Z-axis direction.

The signal generation unit 3 and the scan light emission unit 4 are built in the light source unit UT. Signal light L1 is emitted from the scan light emission unit 4 toward the reflection unit 6.

The reflection unit 6 according to the present embodiment is also a half mirror and has a function of allowing the outside-world light L2 to pass through itself. That is, the reflection unit 6 has a function of reflecting the signal light L1 (video light) coming from the light source unit UT and allowing the outside-world light L2 propagating from the outside of the vehicle CA through the front window W and the polarizing plate 8 toward the eye EY of the user to pass through itself when in use. This function enables the user to visually perceive a virtual image (image) formed by the signal light L1 while seeing the outside world. That is, a see-through-type head-up display is realized.

In the diffracting optical unit 9 according to the present embodiment, as is the case with the first embodiment, when viewed in a direction in which the signal light L1 and the outside-world light L2 propagates (X-axis direction), the grating pattern of each of the pair of diffraction gratings is a pattern in which the linear birefringence portions 94 (first area) made of a birefringent material and the linear convex-patterned ridges 93 (second area) made of a non-birefringent material (isotropic refractive index material) are arranged alternately in the Z-axis direction. That is, it is true to say that the grating patterns of the pair of diffraction gratings of the diffracting optical unit 9 are equivalent to each other.

Let n0 be the index of refraction of the non-birefringent material. Let n1 be the index of refraction of the birefringence portions for a TE wave (light vibrating in the Y-axis direction). Let n2 be the index of refraction of the birefringence portions for a TM wave (light vibrating in the Z-axis direction). The non-birefringent material and the birefringent material are selected appropriately in such a way as to make the index of refraction n0 and the index of refraction n2 equal to each other. In addition, the birefringence portions 94 are structured in such a way as to make the index of refraction n0 and the index of refraction n2 equal to each other.

When the outside-world light L2 polarized into a TM wave by the polarizing plate 8 enters the diffracting optical unit 9, as is the case with the first embodiment, the diffracting optical unit 9 does not function as any diffraction grating for the outside-world light L2. The beam of the outside-world light L2 passes through the diffracting optical unit 9 without diffraction, and enters the eye EY of the user. Consequently, the user can visually perceive an outside-world image that is low in distortion, blur, and the like.

When the signal light L1, which is a TE wave, enters the diffracting optical unit 9, as is the case with the first embodiment, the diffracting optical unit 9 functions as diffraction gratings for the signal light L1. For this reason, the signal light L1 is diffracted by the diffracting optical unit 9 and passes through it while being beam-split (branching) into plural beams along the Z-axis direction. For this reason, the plural split beams of the signal light L1 enter the eye EY of the user. Consequently, the user can visually perceive a virtual image corresponding to image information and plural reproduced images.

When the signal light L1 is split in this way, the signal light L1 is constituted by plural beams and, therefore, its exit pupil is substantially larger than an exit pupil constituted by a single beam. Therefore, it follows that the movement of the pupil of the eye EY is tolerated by a predetermined amount corresponding to the increase in the exit pupil while preventing missing in the field of vision (vignetting) from occurring. Consequently, even when the pupil of the user moves unintendedly, the user can visually perceive an image as supposed to, meaning that the image display device 1 that realizes high visual perceptibility can be obtained.

Therefore, with the image display device 1 described above, despite its simple structure, it is possible to obtain both see-through characteristics of superposing an image on an outside-world image and high visual perceptibility of the outside-world image and the image.

The functional operation and effects that are the same as those of the first and second embodiments can be obtained in the third embodiment, too.

Though an image display device according to the present embodiment is explained on the basis of the illustrated embodiments, the scope of the present embodiment is not limited thereto.

For example, in an image display device according to the present embodiment, the structure of each unit can be replaced with an arbitrary structure that fulfills the same functions, or an arbitrary structure may be added.

The reflection unit 6 may have a flat reflection surface.

The scope of application of an image display device according to exemplary embodiments are not limited to a head-mounted display and a head-up display described above. It can be applied to any mode that has a retinal-scan-type display principle and has see-through characteristics.

### Reference Signs List

- 1: image display device
- 2: frame
- 2': frame
- 3: signal generation unit
- 4: scan light emission unit
- 5: coupling unit
- 6: reflection unit
- 8: polarizing plate
- 9: diffracting optical unit
- 10: reflector
- 17: coil
- 18: signal superposition unit
- 21: nose pad
- 22: front portion
- 23: temple portion
- 24: temple tip portion
- 25: eyewire
- 26: bridge
- 27: cavity
- 31: signal light generation unit
- 32: drive signal generation unit
- 33: control unit
- 34: light detection unit
- 35: fixing unit
- 41: housing
- 42: light scan unit
- 43: lens
- 45: lens
- 46: supporting member
- 71: first optical fiber
- 72: second optical fiber
- 91: substrate
- 92: groove
- 92': concave portion
- 93: ridge
- 93': convex portion
- 94: birefringence portion
- 311: light source unit
- 311B: light source
- 311G: light source
- 311R: light source
- 312B: drive circuit
- 312G: drive circuit
- 312R: drive circuit
- 313B: lens
- 313G: lens
- 313R: lens
- 314: light synthesis unit
- 314a: dichroic mirror
- 314b: dichroic mirror
- 314c: dichroic mirror
- 321: drive circuit
- 322: drive circuit
- CA: vehicle
- CE: ceiling
- EA: ear
- EY: eye
- H: head
- L1: signal light
- L2: outside-world light
- NS: nose
- UT: light source unit
- W: front window

## Claims

1. An image display device, comprising:
a light source that emits first polarized light that is polarized in a first direction;
a light scanner that scans the first polarized light emitted from the light source;
a reflecting optical unit that reflects the first polarized light scanned by the light scanner;
a diffracting optical unit that includes a pair of diffraction gratings whose grating patterns are equivalent to each other and diffracts the first polarized light reflected at the reflecting optical unit; and
a polarization selection unit that is located at an opposite side in relation to the diffracting optical unit with respect to the reflecting optical unit and allows second polarized light to pass, the second polarized light being polarized in a second direction that is orthogonal to the first direction,
wherein the diffracting optical unit diffracts the first polarized light and does not diffract the second polarized light.

2. The image display device according to Claim 1,
wherein the diffracting optical unit includes the pair of diffraction gratings having the grating patterns made of an isotropic refractive index material and further includes birefringence portions that are made of a birefringent material filled between each of the grating patterns of the pair of diffraction gratings as viewed in an incidence direction in which the first polarized light enters the diffracting optical unit.

3. The image display device according to Claim 2,
wherein, when an index of refraction of the isotropic refractive index material is defined as n0, when an index of refraction of the birefringence portions in the first direction is defined as n1, and when an index of refraction of the birefringence portions in the second direction is defined as n2, n1 and n2 are different from each other, and n0 and n2 are equal to each other.

4. The image display device according to Claim 2 or 3,
wherein the diffracting optical unit includes a substrate that is made of the isotropic refractive index material;
wherein a plurality of concave portions is formed in surface of both sides of the substrate; and
wherein the plurality of concave portions is filled with the birefringent material.

5. The image display device according to any one of Claims 1 to 4,
wherein the reflecting optical unit includes a translucent mirror that has a concave reflection surface.

6. The image display device according to any one of Claims 1 to 5,
wherein the diffracting optical unit splits the first polarized light that enters the diffracting optical unit into a plurality of beams by diffracting the first polarized light.

7. The image display device according to any one of Claims 1 to 6,
wherein the first polarized light diffracted by the diffracting optical unit and the second polarized light not diffracted by the diffracting optical unit reaches an eye of a user.

## Amended claims

### Amended claims under Art. 19.1 PCT

**1.** (Amended) An image display device, comprising:
a light source unit that emits first polarized light that is polarized in a first direction;
a light scanner that scans the first polarized light emitted from the light source unit;
a reflecting optical unit that reflects the first polarized light scanned by the light scanner and allows second polarized light to pass, the second polarized light being polarized in a second direction that is orthogonal to the first direction;
a diffracting optical unit that includes a first diffraction grating and a second diffraction grating whose grating patterns are equivalent to each other and diffracts the first polarized light reflected at the reflecting optical unit; and
a polarization selection unit that is located at an opposite side in relation to the diffracting optical unit with respect to the reflecting optical unit and allows second polarized light to pass,
wherein the diffracting optical unit diffracts the first polarized light and does not diffract the second polarized light, and
wherein the second diffraction grating diffracts the first polarized light diffracted at the first diffraction grating.

**2.** (Amended) The image display device according to Claim 1,
wherein the diffracting optical unit includes the first diffraction grating and the second diffraction grating having the grating patterns made of an isotropic refractive index material and further includes birefringence portions that are made of a birefringent material filled between each of the grating patterns of the first diffraction grating and the second diffraction grating as viewed in an incidence direction in which the first polarized light enters the diffracting optical unit.

**3.** The image display device according to Claim 2,
wherein, when an index of refraction of the isotropic refractive index material is defined as n0, when an index of refraction of the birefringence portions in the first direction is defined as n1, and when an index of refraction of the birefringence portions in the second direction is defined as n2, n1 and n2 are different from each other, and n0 and n2 are equal to each other.

**4.** The image display device according to Claim 2 or 3,
wherein the diffracting optical unit includes a substrate that is made of the isotropic refractive index material;
wherein a plurality of concave portions is formed in surface of both sides of the substrate; and
wherein the plurality of concave portions is filled with the birefringent material.

**5.** The image display device according to any one of Claims 1 to 4,
wherein the reflecting optical unit includes a translucent mirror that has a concave reflection surface.

**6.** The image display device according to any one of Claims 1 to 5,
wherein the diffracting optical unit splits the first polarized light that enters the diffracting optical unit into a plurality of beams by diffracting the first polarized light.

**7.** The image display device according to any one of Claims 1 to 6,
wherein the first polarized light diffracted by the diffracting optical unit and the second polarized light not diffracted by the diffracting optical unit reaches an eye of a user.

Statement under Art. 19.1 PCT
In Amended Claim 1 of CLAIMS, in order to make the invention clear, "reflecting optical unit" among the matters recited in Original Claim 1 as filed is made clear on the basis of Paragraph [0082] of the specification. In addition, in the amendment, on the basis of Paragraph [0103] of the specification, "a pair of diffraction gratings" is replaced with "a first diffraction grating and a second diffraction grating", and a relationship of the "first diffraction grating" and the "second diffraction grating" with "first polarized light" is made clear.

In Amended Claim 2 of CLAIMS, "the pair of diffraction gratings" is replaced with "the first diffraction grating and the second diffraction grating". This amendment is consistent with the amendment of Claim 1.

Claims 3 to 7 in the amended sheets remain unchanged.
